# FASCICULE DE BREVET EUROPEEN

(11) **EP 2 900 453 B1**
(45) Date de publication et mention de la délivrance du brevet: **29.11.2017**
(21) Numéro de dépôt: 13766329.0
(22) Date de dépôt: 25.09.2013
(51) Int. Cl.: B29C 49/04, B29C 49/22, B29C 49/38, B29C 49/50, B29L 23/20, B29C 47/00, B29C 47/06, B29K 23/00, B65D 35/10

(54) **PROCÉDÉ DE FABRICATION DE TUBES**
VERFAHREN ZUR HERSTELLUNG VON ROHREN
METHOD FOR MANUFACTURING TUBES

(30) Priorité: 26.09.2012 FR 1259047
(43) Date de publication de la demande: 05.08.2015
(73) Titulaire: Albéa Services, 92230 Gennevilliers (FR)
(72) Inventeur: JAMMET, Jean-Claude, F-80090 Amiens (FR)
(74) Mandataire: Gevers & Orès
(86) Numéro de dépôt international: PCT/EP2013/069906
(87) Numéro de publication internationale: WO 2014/048949

(56) Documents cités:
- DE-A1- 19 627 805
- DE-C- 834 013
- FR-A- 1 354 644
- US-A- 5 849 224

## Description

### DOMAINE DE L'INVENTION

L'invention concerne un procédé de fabrication de tubes, et un tube susceptible d'être obtenu par un tel procédé.

### ETAT DE LA TECHNIQUE

On connait des tubes utilisés pour contenir et distribuer un produit liquide ou pâteux, tel que par exemple un produit cosmétique ou pharmaceutique.

Ces tubes comprennent généralement une tête et une jupe. La jupe est formée d'une paroi souple délimitant une cavité dans laquelle est contenu le produit cosmétique. La tête comprend un goulot présentant un orifice de distribution par lequel le produit contenu dans la cavité peut être extrait. Le goulot présente généralement des filets ou des nervures permettant de fixer un bouchon ou une capsule service sur la tête de distribution, afin d'obturer l'orifice de distribution.

Deux techniques principales sont utilisées pour fabriquer ces tubes.

Une première technique consiste à extruder en continu de la matière plastique sous la forme d'une préforme tubulaire appelée « paraison ». Une fois refroidie, la paraison est coupée en tronçons cylindriques. Les tronçons cylindriques sont ensuite utilisés pour former des jupes de tube.

Chaque tube est ensuite formé en disposant une jupe de tube dans un moule et en surmoulant une tête de tube sur une bordure de la jupe, ou en rapportant et en soudant une tête de tube préformée sur la jupe de tube.

Le tube obtenu est rempli avec du produit, le produit étant introduit dans la cavité via l'ouverture définie par la bordure de la jupe, opposée à la bordure sur laquelle est fixée la tête de tube.

Après remplissage du tube, l'ouverture est fermée en soudant la bordure de la jupe sur elle-même.

Une deuxième technique consiste à extruder une bande de matière plastique présentant deux bordures longitudinales. La bande de matière plastique est repliée sur elle-même de manière à ce que les bordures longitudinales se chevauchent puis les bordures longitudinales sont soudées l'une sur l'autre pour former une préforme tubulaire. La préforme est coupée en tronçons cylindriques. Les tronçons cylindriques sont ensuite utilisés pour former des jupes de tube.

Chacune de ces deux techniques nécessite de surmouler ou de souder une tête de tube sur une jupe, ce qui nécessite des opérations de manipulation pour placer la jupe dans un moule ou réaliser une soudure.

Ces manipulations rendent le procédé de fabrication complexe et interdisent l'utilisation d'un procédé de fabrication en continu.

De ce fait, la cadence de production est limitée : elle est de l'ordre de 300 tubes par minute.

Il existe également des techniques consistant à former une ébauche par soufflage. Le document FR1354644 divulgue la fabrication d'une ébauche dont chacune des extrémités est une tête de tube. Le document DE19627805 divulgue la fabrication d'une ébauche dont les extrémités forment le fond de corps creux.

### RESUME DE L'INVENTION

Un but de l'invention est de proposer un procédé de fabrication qui autorise une production en continu des tubes.

Ce but est atteint dans le cadre de la présente invention grâce à un procédé de fabrication de tubes comprenant des étapes de :
- enfermer une paraison dans un moule pour former une ébauche présentant une première portion d'extrémité ayant la forme d'une première tête de tube, une portion centrale tubulaire, et une deuxième portion d'extrémité ayant la forme d'une deuxième tête de tube, et
- couper la portion centrale tubulaire en une première jupe et une deuxième jupe pour obtenir deux tubes séparés, dont un premier tube incluant la première tête de tube et la première jupe, et un deuxième tube incluant la deuxième tête de tube et la deuxième jupe.

Le procédé proposé permet de former deux tubes en une seule opération de moulage et élimine les opérations consistant à mouler ou rapporter la tête de tube sur la jupe.

L'étape de coupe permet de séparer les deux tubes tout en créant dans chaque tube une ouverture permettant son remplissage ultérieur.

Le procédé de fabrication proposé peut être mis en oeuvre en continu.

Dans une mise en oeuvre du procédé, le moule comprend deux demi-moules, et le procédé comprend des étapes de :
- entrainer en défilement la paraison entre les deux demi-moules, et
- rapprocher les deux-demi moules l'un de l'autre pour enfermer la paraison.

Le procédé peut également comprendre une étape de :
- déplacer plusieurs moules le long de la paraison, de sorte qu'une première ébauche est extraite d'un premier moule pendant qu'une deuxième ébauche est en cours de formation dans un deuxième moule.

Dans une mise en oeuvre du procédé, la première portion d'extrémité et la deuxième portion d'extrémité de l'ébauche sont fermées.

Le procédé peut comprendre une étape de :
- couper l'ébauche dans la première ou la deuxième portion d'extrémité de manière à former un orifice de distribution dans la première ou la deuxième tête de tube.

Le procédé peut également comprendre une étape de :
- introduire de l'air comprimé à l'intérieur de la paraison lorsque la paraison est dans le moule pour plaquer la paraison contre une paroi du moule de manière à conférer à la paraison une forme d'ébauche.

Le procédé peut également comprendre une étape de :
- créer une dépression à l'intérieur du moule pour plaquer la paraison contre une paroi du moule de manière à conférer à la paraison une forme d'ébauche.

Le procédé peut également comprendre une étape de :
- former la paraison par extrusion d'une matière plastique à travers une tête d'extrudeuse.

En particulier, la paraison peut être formée par coextrusion de plusieurs couches en matière plastique.

L'une desdites couches, notamment une couche intermédiaire, est une couche barrière, par exemple en copolymère d'éthylène et d'alcool vinylique (EVOH).

Le procédé peut également comprendre une étape de :
- piloter la tête d'extrudeuse de manière à faire varier un débit de la matière plastique extrudée pour faire varier une épaisseur de la paraison.

Le procédé peut également comprendre une étape de :
- déplacer la première ébauche sous l'action de la seconde ébauche jusqu'à une station servant à la découpe de ladite première ébauche. Autrement dit, lesdites ébauches forment une bande continue jusqu'à leur découpe.

L'invention se rapporte également à un tube comprenant :
- une tête de tube présentant une paroi de tête délimitant un orifice de distribution, et
- une jupe présentant une paroi de jupe délimitant une cavité de stockage d'un produit,
   dans lequel la paroi de tête et la paroi de jupe sont formées de plusieurs couches de matières plastiques superposées, chaque couche s'étendant de manière continue de la tête à la jupe.

L'une desdites couches, notamment une couche intermédiaire, est une couche barrière, par exemple en copolymère d'éthylène et d'alcool vinylique (EVOH).

Ledit tube comprend en outre une extrémité opposée à ladite tête de tube définie par la bordure de la jupe. Ladite extrémité peut être fermée, notamment après remplissage dudit tube, par rapprochement et jonction de ladite bordure sur elle-même. La dite jonction peut être faite par une étape de soudure par exemple. On obtient ainsi un tube avec un fond non plat. Autrement dit, avant remplissage, la bordure de la jupe est libre et la jupe est ouverte du côté opposé à la tête de tube. Après remplissage, la jupe est fermée selon une bande de contact formée par la jonction l'un contre l'autre de deux segments complémentaires de ladite bordure.

Ladite bordure peut être obtenue après coupure en deux d'une ébauche obtenue par exemple selon le procédé de l'invention.

### PRESENTATION DES DESSINS

D'autres caractéristiques et avantages ressortiront encore de la description qui suit, laquelle est purement illustrative et non limitative, et doit être lue en regard des figures annexées, parmi lesquelles :
- les figures 1 à 3 représentent de manière schématique des étapes d'un procédé de fabrication de tubes conforme à un mode de mise en oeuvre de l'invention,
- les figures 4A, 4B et 4C représentent de manière schématique trois tubes susceptibles d'être obtenus par le procédé.

### DESCRIPTION DETAILLEE D'UN MODE DE REALISATION

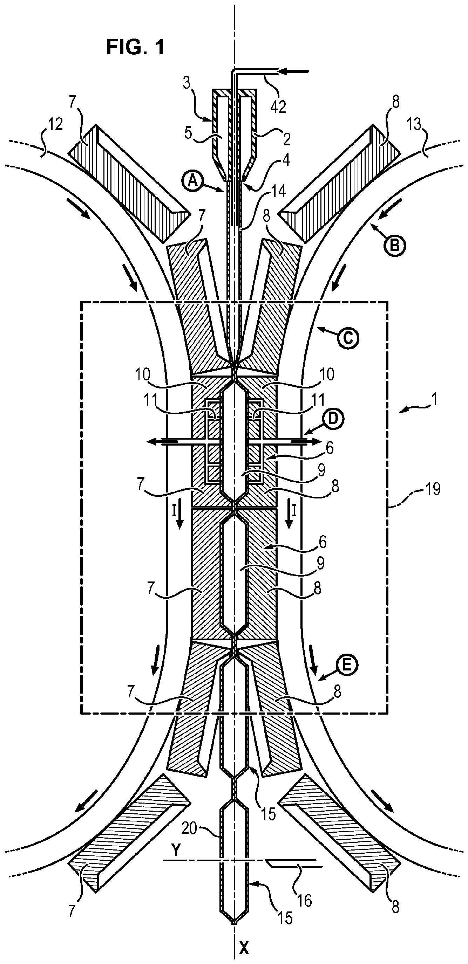

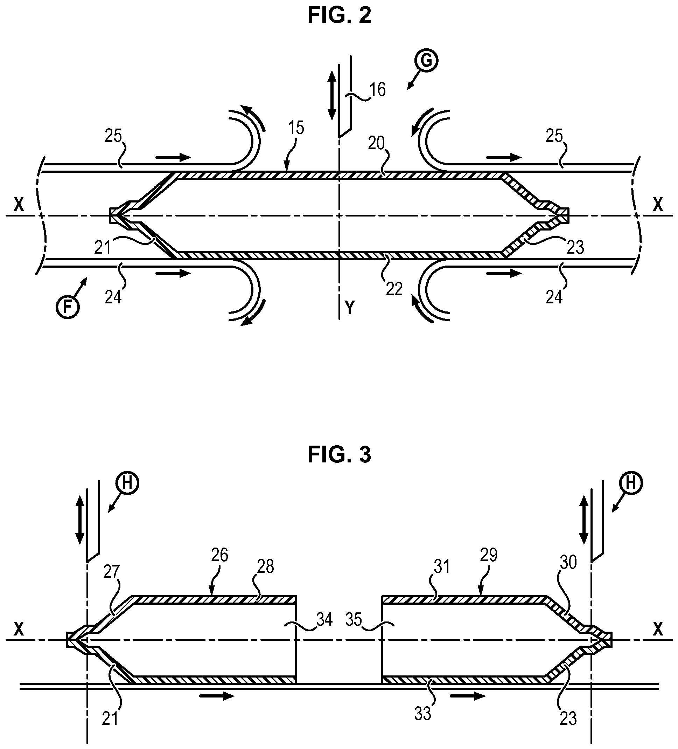

Le procédé de fabrication de tubes est mis en oeuvre avec une machine 1 dont les parties principales sont représentées sur les figures 1 à 3.

La machine 1 représentée comprend une tête d'extrudeuse 2. La tête d'extrudeuse 2 comprend une filière 3 présentant un orifice d'extrusion 4 de forme générale annulaire.

La machine 1 comprend également une pluralité de moules 6. Chaque moule 6 est formé de deux demi-moules 7 et 8. Lorsqu'ils sont réunis, les demi-moules 7 et 8 délimitent entre eux une cavité de moulage 9 fermée.

De plus, chaque demi-moule 7, 8 comprend un corps 10, et une pluralité de canaux 11 ménagés dans le corps 10, les canaux 11 débouchant dans la cavité 9 et étant adaptés pour être reliés à une pompe à vide (non-représentée).

La machine 1 comprend également deux bandes de support 12 et 13 sur lesquelles sont fixées respectivement les demi-moules 7 et 8. Les bandes de support 12 et 13 sont des bandes sans fin. Chaque bande 12, 13 est adaptée pour être entrainée en défilement le long d'une trajectoire fermée (ou trajectoire cyclique). La mise en mouvement simultané des bandes de support 12 et 13 a pour effet que les demi-moules 7 et 8 sont entrainés en défilement le long des trajectoires cycliques respectives.

Les bandes de support 12 et 13 sont agencées de sorte que les demi-moules 7 et 8 défilent dans une zone de moulage 19 selon une direction de défilement X, dans un même sens de défilement (flèche I). Lorsque les demi-moules 7 et 8 pénètrent dans la zone de moulage 19, les demi-moules 7 et 8 sont rapprochés l'un de l'autre, puis réunis pour former la cavité de moulage 9. Lorsque les demi-moules 7 et 8 sortent de la zone de moulage, les demi-moules sont éloignés l'un de l'autre. Ainsi, au cours de leur défilement dans la zone de moulage 19, les demi-moules 7 et 8 sont successivement rapprochés puis éloignés l'un de l'autre.

La machine 1 comprend en outre deux bandes transporteuses 24 et 25, et une lame de coupe 16 agencée le long des bandes transporteuses 24 et 25.

Le procédé de fabrication de tubes se déroule de la manière suivante.

Selon une première étape (A), de la matière plastique chauffée 5 est extrudée à partir de la tête d'extrudeuse 2. La matière plastique chauffée 5 sous pression passe à travers l'orifice d'extrusion 4 annulaire de manière à former une paraison 14 de forme générale tubulaire.

La paraison 14 est entrainée en défilement selon la première direction de défilement X, et défile dans la zone de moulage 19 entre les demi-moules 7 et les demi-moules 8.

Simultanément, selon une deuxième étape (B) les deux bandes de support 12 et 13 sont mises en mouvement, de manière à entrainer les demi-moules 7 et 8 parallèlement à la direction de défilement X, dans le même sens de défilement que la paraison 14.

Selon une troisième étape (C), les demi-moules 7 et 8, en pénétrant dans la zone de moulage 19, sont d'abord rapprochés l'un de l'autre de manière à enfermer la paraison 14 dans le moule 6.

Selon une quatrième étape (D), une légère dépression est créée à l'intérieur de la cavité 9 du moule 6 grâce à la pompe à vide. Cette légère dépression a pour effet de plaquer la paraison 14 contre les parois des demi-moules 7 et 8 de manière à conférer à la paraison 14 une forme d'ébauche 15.

Alternativement, de l'air comprimé peut être introduit à l'intérieur de la paraison 14 via un conduit 42 lorsque la paraison est dans le moule 6 pour plaquer la paraison 14 contre les parois du moule 6 de manière à conférer à la paraison une forme d'ébauche.

Selon une cinquième étape (E), les demi-moules 7 et 8, en sortant de la zone de moulage 19, s'éloignent l'un de l'autre de manière à libérer l'ébauche 15.

Les demi-moules 7 et 8 sont ensuite entrainés par les bandes de support 12 et 13 pour être recyclés.

Le déplacement de plusieurs moules 6 le long de la paraison 14 permet d'obtenir un procédé de fabrication en continu, c'est-à-dire un procédé dans lequel une ébauche 15 est extraite d'un moule 6 pendant qu'une autre ébauche 15 est en cours de formation dans le moule 6 suivant.

L'ébauche 15 formée est constituée d'une enveloppe fermée 20 en matière plastique, présentant une forme symétrique par rapport à un plan Y, perpendiculaire à la direction X. Plus précisément, l'ébauche 15 comprend une première portion d'extrémité 21 ayant la forme d'une première tête de tube, une portion centrale tubulaire 22, et une deuxième portion d'extrémité 23 ayant la forme d'une deuxième tête de tube. La portion centrale tubulaire 22 présente une dimension transversale supérieure à une dimension transversale de chacune des portions d'extrémité 21 et 23.

Selon une sixième étape (F), l'ébauche 15, une fois refroidie, est transportée entre les deux bandes transporteuses 24 et 25 et amenée en regard de la lame de coupe 16.

Selon une septième étape (G), la lame de coupe 16 est déplacée perpendiculairement à la direction de défilement X de l'ébauche de manière à couper l'ébauche 15 dans la partie centrale tubulaire. Plus précisément, l'ébauche 15 est coupée en deux tubes symétriques :
- un premier tube 26 incluant la première portion d'extrémité 21 (qui forme une première tête de tube 27) et une première partie de la portion centrale tubulaire 22 (qui forme la première jupe de tube 28), et
- un deuxième tube 29, symétrique du premier tube 26, incluant la deuxième portion d'extrémité 23 (qui forme une deuxième tête de tube 30) et une deuxième partie de la portion centrale tubulaire 22 (qui forme la deuxième jupe de tube 31).

L'étape de coupe permet de réaliser, à partir de l'ébauche 15 constituée d'une enveloppe fermée 20, deux tubes 26, 29, chaque tube 26, 29 étant constitué d'une enveloppe 32, 33 ouverte présentant une ouverture 34,35.

Selon une huitième étape (H), le premier tube 26 est coupé dans la première portion d'extrémité 21 de manière à former un premier orifice de distribution 36 dans la première tête de tube 27.

De même, le deuxième tube 29 est coupé dans la deuxième portion d'extrémité 23 de manière à former un deuxième orifice de distribution 37 dans la deuxième tête de tube 30.

Dans une variante du procédé, l'ébauche 15 peut être formée d'une enveloppe ouverte au niveau des orifices de distribution 36 et 37, de sorte que l'étape (H) n'est pas nécessaire.

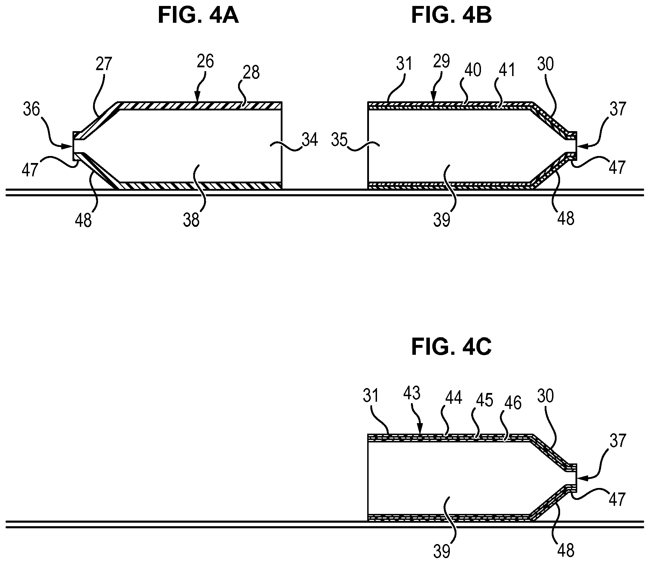

La figure 4A illustre un premier exemple de tube 26 obtenu par le procédé qui vient d'être décrit. Le tube 26 comprend une tête de tube 27 et une jupe 28 délimitant une cavité de stockage 38 d'un produit. La tête de tube 27 et la jupe 28 sont formées en une seule pièce de matière plastique.

La tête de tube 27 comprend un goulot 47 présentant un orifice de distribution 36, et une épaule 48 raccordant le goulot 47 à la jupe 28. Le goulot 47 présente des filets ou des nervures permettant de fixer un bouchon ou une capsule service sur la tête de tube 27, afin d'obturer l'orifice de distribution 36.

On notera qu'il est possible, au cours du procédé de fabrication, de piloter la tête d'extrudeuse 2 de manière à faire varier un débit de la matière plastique extrudée 5 à travers la filière 3 pour faire varier une épaisseur de la paraison 14, et ainsi obtenir une paroi de la tête de tube 27 présentant une épaisseur identique à une épaisseur d'une paroi de la jupe 28.

La figure 4B illustre un deuxième exemple de tube 29 obtenu par le procédé qui vient d'être décrit, mais dans lequel la paraison 14 est formée par coextrusion de deux couches 40 et 41 en matière plastique.

Comme cela est illustré sur la figure 4B, le tube 29 obtenu est identique au tube 26 de la figure 4A, à l'exception du fait que la paroi de la tête 30 et la paroi de la jupe 31 sont formées chacune de deux couches 40 et 41 de matières plastiques superposées, chaque couche 40, 41 s'étendant de manière continue de la tête à la jupe.

Le tube 29 comprend une tête de tube 30 présentant un orifice de distribution 37, et une jupe 31 délimitant une cavité de stockage 39 d'un produit. La tête de tube 30 et la jupe 31 sont formées en deux couches 40, 41 de matière plastique superposées.

La couche externe 40 est par exemple formée en polyéthylène (PE), en polypropylène (PP), polyéthylène téréphtalate (PET) ou en polystyrène (PS) tandis que la couche 41 interne est par exemple formée en copolymère d'éthylène et d'alcool vinylique (EVOH), polyamide (PA), polynaphtalate d'éthylène (PEN), polyfluorure de vinylidène (PVDF) ou en polychlorure de vinylidène (PVDC). Il est ainsi possible d'obtenir un tube 29 dont la couche interne 41 forme une couche barrière s'étendant de manière continue de la tête à la jupe.

On notera qu'il est possible de piloter la tête d'extrusion 2 de manière à faire varier des débits de l'une et l'autre des matières plastiques coextrudées pour faire varier les épaisseurs des couches de la paraison, et ainsi obtenir des couches 40, 41 d'épaisseur différentes entre la tête de tube et la jupe.

La figure 4C illustre un troisième exemple de tube 43 obtenu par le procédé qui vient d'être décrit, mais dans lequel la paraison 14 est formée par coextrusion de trois couches 44, 45 et 46 en matière plastique.

Comme cela est illustré sur la figure 4C, le tube 43 obtenu est identique au tube 26 de la figure 4A, à l'exception du fait que la paroi de la tête 30 et la paroi de la jupe 31 sont formées chacune de trois couches 44, 45 et 46 de matières plastiques superposées, chaque couche 44, 45 et 46 s'étendant de manière continue de la tête à la jupe.

Le tube 43 comprend une tête de tube 30 présentant un orifice de distribution 37, et une jupe 31 délimitant une cavité de stockage 39 d'un produit. La tête de tube 30 et la jupe 31 sont formées en trois couches 44, 45, 46 de matière plastique superposées.

La couche externe 44 et la couche interne 46 sont par exemple formées en polyéthylène (PE), en polypropylène (PP), polyéthylène téréphtalate (PET) ou en polystyrène (PS).

La couche intermédiaire 45 disposée entre la couche externe 44 et la couche interne 46 est par exemple formée en copolymère d'éthylène et d'alcool vinylique (EVOH), en polyamide (PA), en polynaphtalate d'éthylène (PEN), en polyfluorure de vinylidène (PVDF) ou en polychlorure de vinylidène (PVDC).

Dans ce cas, la couche intermédiaire 45 forme une couche barrière s'étendant de manière continue de la tête à la jupe.

De plus, les trois couches de matière plastique peuvent être liées entre elles par des couches de liaison, telles que des couches en copolymère d'éthylène et de vinyl acrylate (EVA), en copolymère d'éthylène et de méthyl acrylate (EMA), en copolymère d'éthylène et de butyl acrylate (EBA), en polyéthylène graissé anhydride maléique ou en copolymère d'éthylène anhydride maléique et d'acrylate. Le tube 43 comprend ainsi deux couches de liaison : une première couche de liaison interposée entre la couche externe 44 et la couche intermédiaire 45 et une deuxième couche de liaison interposée entre la couche intermédiaire 45 et la couche interne 46.

## Revendications

1. Procédé de fabrication de tubes comprenant des étapes de :
- enfermer une paraison (14) dans un moule (6) pour former une ébauche (15) présentant une première portion d'extrémité (21) ayant la forme d'une première tête de tube (27), une portion centrale tubulaire (22), et une deuxième portion d'extrémité (23) ayant la forme d'une deuxième tête de tube (30),
- déplacer la première ébauche sous l'action de la seconde ébauche jusqu'à une station servant à la découpe de ladite première ébauche, et
- couper la portion centrale tubulaire (22) en une première jupe (28) et une deuxième jupe (31) pour obtenir deux tubes séparés (26, 29), dont un premier tube (26) incluant la première tête de tube (27) et la première jupe (28), et un deuxième tube (29) incluant la deuxième tête de tube (30) et la deuxième jupe (31).

2. Procédé selon la revendication 1, dans lequel le moule (6) comprend deux demi-moules (7, 8), et comprenant des étapes de :
- entrainer en défilement la paraison (14) entre les deux demi-moules (7, 8), et
- rapprocher les deux-demi moules (7, 8) l'un de l'autre pour enfermer la paraison (14).

3. Procédé selon l'une des revendications 1 ou 2, comprenant une étape de :
- déplacer plusieurs moules (7, 8) le long de la paraison (14), de sorte qu'une première ébauche (15) est extraite d'un premier moule (6) pendant qu'une deuxième ébauche (15) est en cours de formation dans un deuxième moule (6).

4. Procédé selon l'une des revendications qui précèdent, dans lequel la première portion d'extrémité (21) et la deuxième portion d'extrémité (23) de l'ébauche (15) sont fermées.

5. Procédé selon la revendication 4, comprenant une étape de :
- couper l'ébauche (15) dans la première portion d'extrémité (21) ou dans la deuxième portion d'extrémité (23) de manière à former un orifice de distribution (36, 37) dans la première tête de tube (27) ou dans la deuxième tête de tube (30).

6. Procédé selon l'une des revendications 1 à 5, comprenant une étape de :
- introduire de l'air comprimé à l'intérieur de la paraison (14) lorsque la paraison (14) est dans le moule (6) pour plaquer la paraison (14) contre une paroi du moule (6) de manière à conférer à la paraison une forme d'ébauche (15).

7. Procédé selon l'une des revendications 1 à 5, comprenant une étape de :
- créer une dépression à l'intérieur du moule (6) pour plaquer la paraison (14) contre une paroi du moule (6) de manière à conférer à la paraison (14) une forme d'ébauche (15).

8. Procédé selon l'une des revendications 1 à 7, comprenant une étape de :
- former la paraison (14) par extrusion d'une matière plastique à travers une tête d'extrudeuse (2).

9. Procédé selon la revendication 8, dans lequel la paraison (14) est formée par coextrusion de plusieurs couches (40, 41) en matière plastique.

10. Procédé selon l'une des revendications 8 ou 9, comprenant une étape de :
- piloter la tête d'extrudeuse (2) de manière à faire varier un débit de la matière plastique (5) extrudée pour faire varier une épaisseur de la paraison (14).

## Patentansprüche

1. Verfahren zur Herstellung von Rohren, umfassend die Schritte:
- Einschließen eines Vorformlings (14) in eine Form (6), um einen Rohling (15) zu bilden, der mit einem ersten Endabschnitt (21), der die Form eines ersten Rohrkopfs (27) aufweist, einem rohrförmigen Mittelabschnitt (22) und einem zweiten Endabschnitt (23) versehen ist, der die Form eines zweiten Rohrkopfs (30) aufweist,
- Verschieben des ersten Rohlings unter Wirkung des zweiten Rohlings bis zu einer Station, die zum Zerschneiden des ersten Rohlings dient, und
- Zerschneiden des rohrförmigen Mittelabschnitts (22) in eine erste Schürze (28) und eine zweite Schürze (31), um zwei getrennte Rohre (26, 29) zu erhalten, wobei ein erstes Rohr (26) den ersten Rohrkopf (27) und die erste Schürze (28) enthält, und ein zweites Rohr (29) den zweiten Rohrkopf (30) und die zweite Schürze (31) enthält.

2. Verfahren nach Anspruch 1, wobei die Form (6) zwei Halbformen (7, 8) umfasst und umfassend die folgenden Schritte:
- rollendes Antreiben des Vorformlings (14) zwischen den beiden Halbformen (7, 8), und
- Annähern der beiden Halbformen (7, 8) aneinander, um den Vorformling (14) zu umschließen.

3. Verfahren nach einem der Ansprüche 1 oder 2, umfassend einen Schritt:
- Verschieben mehrerer Formen (7, 8) entlang des Vorformlings (14), so dass ein erster Rohling (15) aus einer ersten Form (6) entnommen wird, während ein zweiter Rohling (15) in einer zweiten Form (6) gebildet wird.

4. Verfahren nach einem der vorstehenden Ansprüche, wobei der erste Endabschnitt (21) und der zweite Endabschnitt (23) des Rohlings (15) geschlossen sind.

5. Verfahren nach Anspruch 4, umfassend einen Schritt:
- Schneiden des Rohlings (15) in den ersten Endabschnitt (21) oder in den zweiten Endabschnitt (23) der Art, um eine Abgabeöffnung (36, 37) in dem ersten Rohrkopf (27) oder in dem zweiten Rohrkopf (30) zu bilden.

6. Verfahren nach einem der Ansprüche 1 bis 5, umfassend einen Schritt:
- Einführen von Druckluft in das Innere des Vorformlings (14), wenn der Vorformling (14) in der Form (6) ist, zum Pressen des Vorformlings (14) gegen eine Wand der Form (6) der Art, um dem Vorformling eine Form des Rohlings (15) zu geben.

7. Verfahren nach einem der Ansprüche 1 bis 5, umfassend einen Schritt:
- Erzeugen eines Unterdrucks im Inneren der Form (6), um den Vorformling (14) gegen eine Wand der Form (6) derart zu pressen, um dem Vorformling (14) eine Form des Rohlings (15) zu geben.

8. Verfahren nach einem der Ansprüche 1 bis 7, umfassend einen Schritt:
- Formen des Vorformlings (14) durch Extrusion eines Kunststoffmaterial durch einen Extruderkopf (2).

9. Verfahren nach Anspruch 8, wobei der Vorformling (14) durch Koextrusion aus mehreren Schichten (40, 41) von Kunststoffmaterial gebildet wird.

10. Verfahren nach einem der Ansprüche 8 oder 9, umfassend einen Schritt:
- Fahren des Extruderkopfes (2) der Art, um den Durchfluss des extrudierten Plastikmaterials (5) zu variieren, um die Dicke des Vorformlings (14) zu variieren.

## Claims

1. Method of manufacture of tubes comprising the steps of:
- enclosing a parison (14) in a mould (6) to form a blank (15) presenting a first end portion (21) having the shape of a first tube head (27), a central tubular portion (22), and a second end portion (23) having the shape of a second tube head (30),
- moving the first blank under the action of the second blank as far as a station serving for the cutting of said first blank, and
- cutting the central tubular portion (22) in a first skirt (28) and a second skirt (31) to obtain two separate tubes (26, 29), of which a first tube (26) including the first tube head (27) and the first skirt (28), and a second tube (29) including the second tube head (30) and the second skirt (31).

2. A method according to claim 1, wherein the mould (6) comprises two half-moulds (7, 8), and comprising the steps of:
- driving by running the parison (14) between the two half-moulds (7, 8), and
- bringing together the two half-moulds (7, 8) one to the other to enclose the parison (14).

3. A method according to one of claims 1 or 2, comprising a step of:
- moving several moulds (7, 8) along the parison (14), such that a first blank (15) is extracted from the first mould (6) while a second blank (15) is in the process of formation in a second mould (6).

4. A method according to any one of the preceding claims, wherein the first end portion (21) and the second end portion (23) of the blank (15) are closed.

5. A method according to claim 4, comprising a step of:
- cutting the blank (15) in the first end portion (21) or in the second end portion (23) so as to form a distribution orifice (36, 37) in the first tube head (27) or in the second tube head (30).

6. A method according to any one of claims 1 to 5, comprising a step of:
- introducing compressed air inside the parison (14) when the parison (14) is in the mould (6) to flatten the parison (14) against a wall of the mould (6) so as to give the parison a blank shape (15).

7. A method according to any one of claims 1 to 5, comprising a step of:
- creating a vacuum inside the mould (6) to flatten the parison (14) against a wall of the mould (6) so as to give the parison (14) a blank shape (15).

8. A method according to any one of claims 1 to 7, comprising a step of:
- forming the parison (14) by the extrusion of a plastic material through an extruder head (2).

9. A method according to claim 8, wherein the parison (14) is formed by the coextrusion of several layers (40, 41) in plastic material.

10. A method according to one of claims 8 or 9, comprising a step of:
- controlling the extruder head (2) so as to have vary a flow rate of the extruded plastic material (5) to have vary a thickness of the parison (14).
